# EUROPÄISCHE PATENTANMELDUNG

(11) **EP 1 982 572 A1**
(43) Veröffentlichungstag der Anmeldung: **22.10.2008**
(21) Anmeldenummer: 08007255.6
(22) Anmeldetag: 12.04.2008
(51) Int. Cl.: A01D 34/82, A01D 69/03, B62D 51/06

(54) **Antriebsaggregat für gärtnerische oder landwirtschaftliche Arbeitsgeräte**

(30) Priorität: 20.04.2007 DE 202007005718 U
(71) Anmelder: Kersten, Dipl.-Ing., Georg, 46459 Rees (DE)
(72) Erfinder: Kersten, Georg, Dipl.-Ing., 46459 Rees (DE); Bosch, Robert, Dipl.-Ing. (FH), 47546 Kalkar (DE)
(74) Vertreter: Feder, Wolf-Dietrich

(57) **Zusammenfassung**

Ein Antriebsaggregat für gärtnerische oder landwirtschaftliche Arbeitsgeräte mit einem über zwei Räder (2.1, 2.2) mit Einzelradantrieb verfahrbaren Grundgestell (1), an dessen Rückseite eine Handführung (3) mit zwei Handgriffen (4.1, 4.2) angeordnet ist. An der Vorderseite ist ein Arbeitsgerät befestigbar. Jeder Einzelradantrieb besitzt einen durch ein Steuerventil in beiden Antriebsrichtungen ansteuerbaren Hydraulikmotor. Beide Hydraulikmotoren werden von einem gemeinsamen Hydraulikkreis gespeist. Die Steuerventile werden von im Bereich der Handgriffe angeordneten Betätigungselementen aus betätigt. Als Betätigungselemente dienen zwei erste Lenkhebel (5.11, 5.21), die jeweils im Bereich des rechten und des linken Handgriffs (4.1, 4.2) angeordnet und jeweils über einen Bowdenzug mit einem der Steuerventile verbunden sind. Jedem ersten Lenkhebel (5.11, 5.21) ist ein zweiter Lenkhebel (5.12, 5.22) zugeordnet, der ebenfalls über einen Bowdenzug mit einem der Steuerventile verbunden ist. Bei Betätigung eines der ersten Lenkhebel (5.11, 5.21) wird die Bewegung des ihm zugeordneten Hydraulikmotors in der Vorwärts-Antriebsrichtung gesteuert. Die Betätigung eines der zweiten Lenkhebel (5.12, 5.22) steuert die Bewegung des ihm zugeordneten Antriebsmotors in der Rückwärts-Antriebsrichtung.

## Beschreibung

Die Erfindung betrifft ein Antriebsaggregat für gärtnerische oder landwirtschaftliche Arbeitsgeräte mit einem auf dem Erdboden über zwei Räder mit Einzelradantrieb verfahrbaren Grundgestell, an dessen Rückseite eine Handführung mit zwei Handgriffen angeordnet ist, während an der Vorderseite ein Arbeitsgerät befestigbar ist, wobei jeder Einzelradantrieb einen durch ein Steuerventil in beiden Antriebsrichtungen ansteuerbaren Hydraulikmotor aufweist und die beiden Hydraulikmotoren von einem gemeinsamen Hydraulikkreis gespeist werden, der eine von einem Verbrennungsmotor angetriebene Hydraulikpumpe enthält und wobei die Steuerventile von im Bereich der Handgriffe angeordneten Betätigungselementen aus betätigt werden.

Derartige Antriebsaggregate sind an sich bekannt und werden zum Bewegen und zum Antrieb unterschiedlicher gärtnerischer oder landwirtschaftlicher Arbeitsgeräte, wie beispielsweise Mähmaschinen, verwendet.

Bei bekannten Antriebsaggregaten erfolgt die Ansteuerung der Einzelradantriebe mittels einer aufwendigen elektrisch ansteuerbaren Ventiltechnik. Diese hat sich nicht nur als teuer, sondern in vielen Fällen auch als störungsanfällig erwiesen, wobei aufgrund der eingesetzten komplizierten Technik Wartungs- und Reparaturarbeiten sehr erschwert werden und vor allem nicht vor Ort durchgeführt werden können. Es sind auch Antriebsaggregate bekannt mit zwei unabhängigen Hydraulikkreisen, die jeweils eine Hydraulikpumpe enthalten.

Der Erfindung liegt die Aufgabe zugrunde, ein Antriebsaggregat mit den eingangs und im Oberbegriff des Patentanspruchs 1 angegebenen Merkmalen so auszugestalten, dass die Ansteuerung der Einzelradantriebe in einfacher, wenig störungsanfälliger Weise durchgeführt wird und eine möglichst kostengünstige Lösung erreicht wird.

Die Lösung dieser Aufgabe erfolgt erfindungsgemäß prinzipiell mit den Merkmalen aus dem kennzeichnenden Teil des Patentanspruchs 1. Vorteilhafte Weiterbildungen der Erfindung sind in den abhängigen Ansprüchen beschrieben.

Die Erfindung sieht eine rein mechanische Betätigung der beiden den Einzelradantrieben zugeordneten Steuerventile vor, wobei mit den beiden ersten Lenkhebeln jedes der beiden Räder des Antriebsaggregats in seiner Bewegungsrichtung und Antriebsleistung gesondert angesteuert wird.
Bei einer besonders vorteilhaften Ausführungsform der Erfindung ist gemäß den Ausführungsformen nach den Schutzansprüchen 2 bis 11 jedem ersten Lenkhebel ein zweiter Lenkhebel zugeordnet, wobei vorzugsweise der erste und zweite Lenkhebel auf den gleichen Bowdenzug einwirkt. Der erste und zweite Lenkhebel können dann derart miteinander gekoppelt werden und das jeweilige Steuerventil kann derart ausgebildet und eingestellt sein, dass bei Betätigung des ersten Lenkhebels von einer voll ausgefahrenen Stellung bis zu einer voll eingefahrenen Stellung die Antriebsleistung in Vorwärtsrichtung von 100 % auf 0 % reduziert wird, während bei einer daraufhin erfolgenden Betätigung des zweiten Lenkhebels von einer ausgefahrenen Stellung in die voll eingefahrene Stellung die Antriebsleistung in Rückwärtsrichtung von 0 % auf 100 % erhöht wird. Wie weiter unten anhand eines Ausführungsbeispiels genauer erläutert, können jeweils die ersten und zweiten Lenkhebel so angeordnet und miteinander gekoppelt sein, dass ein doppelter Hub des Bowdenzuges realisiert wird, in dem bei Betätigung des jeweils ersten Lenkhebels aus der voll ausgefahrenen in die eingefahrene Stellung der zweite Lenkhebel in Folge der Kopplung mitgeführt wird und der Bowdenzug einen ersten Hub ausführt, welcher der Reduzierung der Antriebsleistung von 100 % auf 0 % entspricht. Wenn der erste Lenkhebel in der eingefahrenen Stellung an einem Anschlag, beispielsweise dem Handgriff der Handführung, anliegt, kann durch Umgreifen mit der Hand der zweite Lenkhebel erreicht und betätigt werden, was zur Folge hat, dass der Bowdenzug einen zweiten Hub ausführt, durch den die Antriebsleistung in Rüchwärtsrichtung von 0 auf 100 % erhöht wird. Es ist so möglich, mit einfachen Handgriffen die Bewegungen des Antriebsaggregates und die Lenkvorgänge zu steuern, indem man die beiden Räder mit unterschiedlichen Geschwindigkeiten und gegebenenfalls unterschiedlichen Drehrichtungen ansteuert, wodurch es möglich ist, sehr enge Kurven zu fahren und auch gegebenenfalls im Notfall das Fahrzeug rasch anzuhalten, um es dann zurücksetzen zu lassen.
Diese Ausführungsform der Steuereinrichtung mit erstem und zweitem Lenkhebel stellt auch eine Art Sicherheitseinrichtung dar, da ein bewusstes Umgreifen an den beiden Lenkhebeln erforderlich ist, um die Drehrichtung des betreffenden Rades zu verändern. Das sofortige Anhalten des Antriebsaggregats erreicht man durch Bewegen der beiden ersten Lenkhebel in die voll eingefahrene Stellung.

Das erfindungsgemäße Antriebsaggregat ist in zufriedenstellender Funktionsweise auch unter schwierigsten Bedingungen, zum Beispiel einer steilen Handlage, bedienbar. Es ist aufgrund der rein mechanischen Ausbildung der Steuerelemente wenig störungsanfällig und der Wartungsaufwand ist gering. Eventuelle Nachjustierungen oder auch das Beheben von Fehlern kann mit rein mechanischen Werkzeugen unter Umständen auch am Arbeitsort selbst erfolgen.

Im folgenden wird anhand der beigefügten Zeichnungen ein Ausführungsbeispiel für ein Antriebsaggregat nach der Erfindung näher erläutert.

In den Zeichnungen zeigen:
Fig. 1 ein Antriebsaggregat ohne Arbeitsgerät in einer perspektivischen Ansicht schräg von hinten;
Fig. 2 das Antriebsaggregat nach Fig. 1 in einer Seitenansicht;

Die Figuren 3A bis 3C einen Handgriff des Antriebsaggregats nach Figuren 1 und 2 bei verschiedenen Stellungen des ersten und zweiten Lenkhebels.

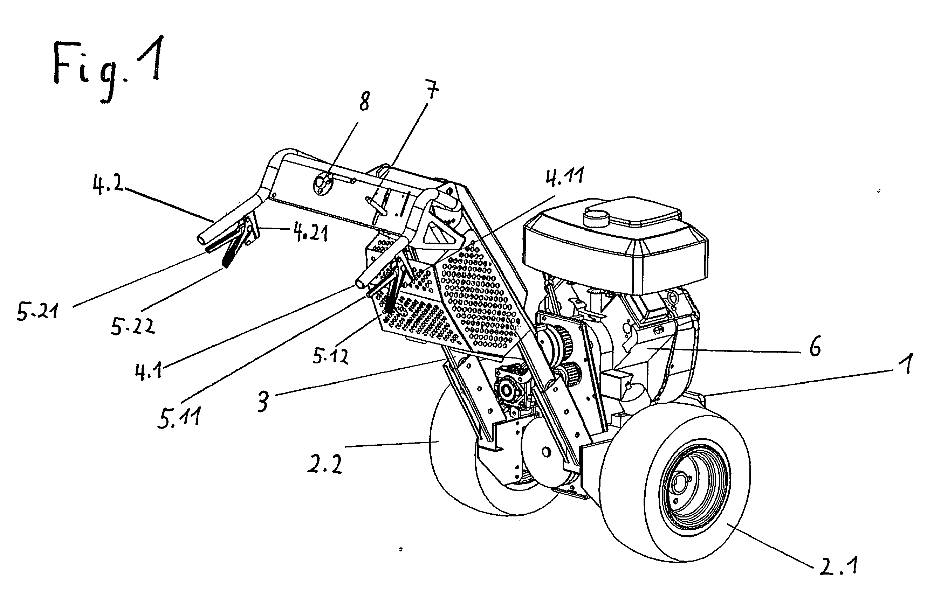

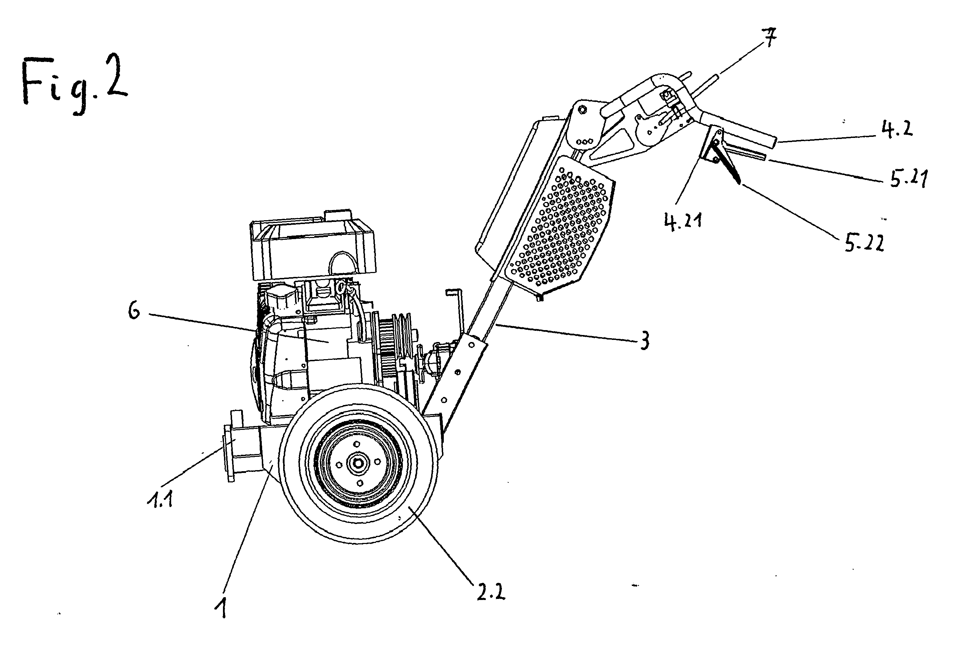

In den Figuren 1 und 2 ist ein Antriebsaggregat für gärtnerische und landwirtschaftliche Arbeitsgeräte, beispielsweise eine Mähmaschine, ohne das Arbeitsgerät selber dargestellt. Das Antriebsaggregat besitzt ein Grundgestell 1, das über zwei Räder 2.1 und 2.2 auf dem Erdboden verfahrbar ist. An der Rückseite des Grundgestells 1 ist eine Handführung 3 angeordnet, die an ihrem Ende zwei Handgriffe 4.1 und 4.2 besitzt. An der Vorderseite des Grundgestells ist das nicht dargestellte Arbeitsgerät befestigbar. Die beiden Räder 2.1 und 2.2 werden in nicht dargestellter und an sich bekannter Weise über einen Einzelradantrieb angetrieben. Jeder Einzelradantrieb besitzt einen, durch ein nicht dargestelltes Steuerventil in beiden Antriebsrichtungen ansteuerbaren, nicht dargestellten Hydraulikmotor. Die beiden Hydraulikmotoren jedes Einzelradantriebs werden von einem gemeinsamen, nicht dargestellten Hydraulikkreis gespeist, der eine von einem Verbrennungsmotor 6 angetriebene Hydraulikpumpe enthält. Die Steuerventile der Einzelradantriebe sind mechanisch betätigbar und sind als Proportional-Ventile ausgebildet. Wie aus Fig. 1 ersichtlich, sind an der Handführung an jedem Handgriff jeweils ein erster Lenkhebel 5.11 beziehungsweise 5.21 und ein zweiter Lenkhebel 5.12 beziehungsweise 5.22 schwenkbar angeordnet. Jedes Lenkhebelpaar 5.11-5.12 beziehungsweise 5.21-5.22 ist über einen nicht dargestellten, gemeinsamen Bowdenzug mit einem der beiden Steuerventile verbunden.

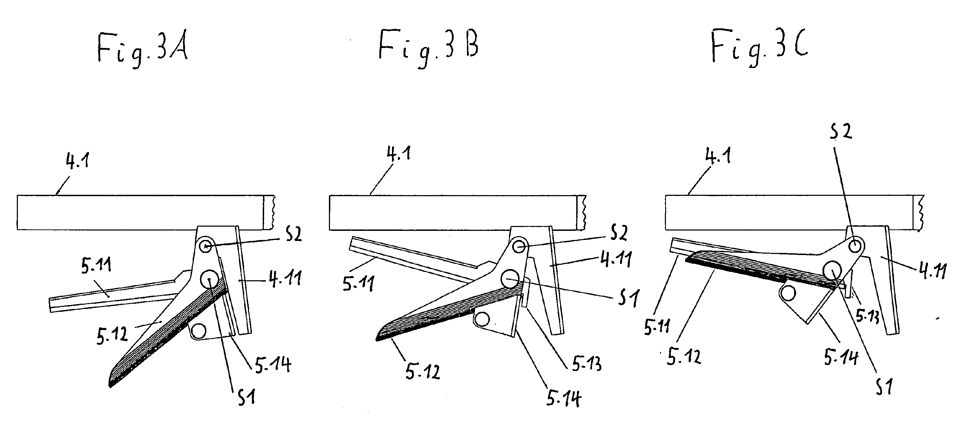

Im folgenden wird anhand der Figuren 3A bis 3C die Ausbildung und Funktionsweise der Lenkhebel am Beispiel des am rechten Handgriff 4.1 angeordneten Lenkhebelpaars 5.11-5.12 näher erläutert.

Am Handgriff 4.1 ist ein Befestigungselement 4.11 angeschweißt, an dem sich der Schwenkpunkt S 2 des zweiten Lenkhebels 5.12 befindet. Der Schwenkpunkt S 1 des ersten Lenkhebels 5.11 liegt in einem vorgegebenen Abstand vom Schwenkpunkt S 2 am zweiten Lenkhebel 5.12. Der nicht dargestellte Bowdenzug zur Ansteuerung des Steuerventils ist mit dem zweiten Lenkhebel 5.12 verbunden. Die Anordnung ist so, dass der erste Lenkhebel 5.11 zwischen dem Handgriff 4.1 und dem zweiten Lenkhebel 5.12 angeordnet ist, wobei die beiden Lenkhebel 5.11 und 5.12 sich in der gleichen Schwenkebene bewegen. Der zweite Lenkhebel 5.12 besitzt einen Anschlag 5.14, mit dem er in der in Figur 3A dargestellten ausgefahrenen Ruhestellung an einer entsprechenden Anschlagfläche des Befestigungselements 4.11 anliegt. Der erste Lenkhebel 5.11 besitzt als Koppelelement einen über seinen Schwenkpunkt S 1 hinausragenden, als Haken 5.13 ausgebildeten Mitnehmer, der die Anschlagfläche am Anschlag 5.14 übergreift, so dass bei einer Betätigung des ersten Lenkhebels 5.11 aus der in Figur 3A dargestellten Ruhestellung in die in Figur 3B dargestellte, voll eingefahrene Endstellung der zweite Lenkhebel 5.12 mitgenommen wird. Bei dieser Bewegung führt der nicht dargestellte Bowdenzug einen ersten Hub aus. Die Einstellung ist derart, dass bei einer Bewegung des ersten Lenkhebels 5.11 aus der in Figur 3A dargestellten Ruhestellung in die in Figur 3B dargestellte Endstellung die Antriebsleistung des zugeordneten Einzelradantriebs in Vorwärtsrichtung von 100 % auf 0 % reduziert wird. Dies bedeutet, dass in der in Figur 3B dargestellten Stellung des ersten Lenkhebels 5.11 der Einzelradantrieb zum Stillstand kommt. In der in Figur 3B dargestellten Stellung kann nun der Bediener des Antriebsaggregats vom ersten Lenkhebel 5.11 auf den zweiten Lenkhebel 5.12 umgreifen und diesen aus der in Figur 3 B dargestellten teilausgefahrenen Stellung weiterbewegen in die in Figur 3 C dargestellte voll eingefahrene Endstellung. Bei dieser Bewegung führt der Bowdenzug einen zweiten Hub aus und die Einstellung ist so, dass durch diesen Hub die Antriebsleistung des Einzelradantriebs in Rückwärtsrichtung von 0 % auf 100 % erhöht wird. In der in Figur 3C dargestellten Stellung des zweiten Lenkhebels 5.12 dreht also das zugeordnete Rad 2.1 mit voller Leistung in Rückwärtsrichtung.
Die Bewegung der beiden Lenkhebel 5.11 und 5.12 erfolgt gegen nicht dargestellte Rückstellfedern, so dass sie bei ihrem Loslassen in die Ausgangsstellung gemäß Figur 3A zurückkehren.
Um ein bequemes Betätigen der beiden Lenkhebel zu ermöglichen, ist der erste Lenkhebel 5.11 stangenförmig ausgebildet, während der zweite Lenkhebel 5.12 an der dem ersten Lenkhebel 5.11 zugewandten Seite als Mulde oder Schale ausgebildet ist, so dass er in der in Figur 3C dargestellten Endstellung beider Lenkhebel in diese Schale einfällt, so dass die beiden Lenkhebel in dieser Stellung ineinander liegen und sich am Handgriff 4.1 als Anschlag abstützen.

Das Lenkhebelpaar 5.21 und 5.22, das über das Befestigungselement 4.21 mit dem Handgriff 4.2 verbunden ist, weist die gleiche Ausbildung und Funktionsweise auf, wie das Lenkhebelpaar 5.11-5.12.
Durch die Betätigung der beiden Lenkhebelpaare lässt sich die Bewegung des Antriebsaggregats in Vorwärtsrichtung und Rückwärtsrichtung in einfacher Weise steuern.
Soll beispielsweise eine Linkskurve bei Vorwärtsfahrt eingeleitet werden, so kann dies durch Betätigung des ersten Lenkhebels 5.21 am linken Handgriff 4.2 erfolgen. Je mehr der erste Lenkhebel 5.21 durchgezogen wird, desto kleiner wird der Wendekreis, bis schließlich das linke Rad 2.2 blockiert. Das rechte Rad 2.1 wird bei diesem Lenkmanöver nicht beeinflusst und behält seine Geschwindigkeit bei. Bei Bedarf kann durch Umgreifen vom ersten Lenkhebel 5.21 auf den zweiten Lenkhebel 5.22 das linke Rad 2.2 in Rückwärtsrichtung bewegt werden, wodurch der Wendekreis derart verkleinert werden kann, dass sich das Antriebsaggregat um seine eigene Hochachse dreht. Es liegt bei beiden Funktionen der Lenkhebel ein proportionales Verhalten vor. Dies bedeutet, je weiter der zweite Lenkhebel 5.22 die eingefahrene Stellung bewegt, also durchgezogen wird, desto schneller dreht das linke Rad 2.2 aus dem blockierten Zustand heraus in die entgegengesetzte Fahrtrichtung.
Bei gleichzeitigem Betätigen der beiden ersten Lenkhebel 5.11 und 5.21 bleibt das Antriebsaggregat stehen, während es sich bei gleichzeitigem Betätigen der beiden zweiten Lenkhebel 5.12 und 5.22 sich in Rückwärtsrichtung bewegt. Durch die besondere Anordnung des ersten Lenkhebels 5.11 und 5.21 innerhalb des zweiten Lenkhebels 5.12 und 5.22 ist es auch möglich, die zweiten Lenkhebel 5.12 und 5.22 unmittelbar zu betätigen, wobei die ersten Lenkhebel 5.11 und 5.21 mitgenommen werden und das Antriebsaggregat nach dem Stillstand direkt in die Rückwärtsbewegung übergeht.

An der Handführung 3 sind weitere Betätigungselemente 7 und 8 angeordnet, die beispielsweise zum Anlassen des Verbrennungsmotors 6 und weiteren Steuervorgängen dienen können.

## Patentansprüche

1. Antriebsaggregat für gärtnerische oder landwirtschaftliche Arbeitsgeräte mit einem auf dem Erdboden über zwei Räder mit Einzelradantrieb verfahrbaren Grundgestell, an dessen Rückseite eine Handführung mit zwei Handgriffen angeordnet ist, während an der Vorderseite ein Arbeitsgerät befestigbar ist, wobei jeder Einzelradantrieb einen durch ein Steuerventil in beiden Antriebsrichtungen ansteuerbaren Hydraulikmotor aufweist und die beiden Hydraulikmotoren von einem gemeinsamen Hydraulikkreis gespeist werden, der eine von einem Verbrennungsmotor angetriebene Hydraulikpumpe enthält und wobei die Steuerventile von im Bereich der Handgriffe angeordneten Betätigungselementen aus betätigt werden, **dadurch gekennzeichnet, dass** als Betätigungselemente zwei erste Lenkhebel (5.11, 5.21) dienen, die jeweils im Bereich des rechten und des linken Handgriffs (4.1, 4.2) angeordnet und jeweils über einen Bowdenzug mit einem der mechanisch betätigbaren Steuerventile verbunden sind, wobei jedem ersten Lenkhebel (5.11, 5.21) ein zweiter Lenkhebel (5.12, 5.22) zugeordnet ist, der ebenfalls über einen Bowdenzug mit einem der Steuerventile verbunden ist und die Steuerung so ausgebildet ist, dass bei Betätigung eines der ersten Lenkhebel (5.11, 5.21) die Bewegung des ihm zugeordneten Hydraulikmotors in der Vorwärts-Antriebsrichtung steuert, während die Betätigung eines der zweiten Lenkhebel (5.12, 5.22) die Bewegung des ihm zugeordnetem Hydraulikmotors in der Rückwärts-Antriebsrichtung steuert.

2. Antriebsaggregat nach Anspruch 1, **dadurch gekennzeichnet, dass** die einem gemeinsamen Hydraulikmotor angeordneten ersten und zweiten Lenkhebel (5.11, 5.12; 5.21, 5.22) auf den gleichen Bowdenzug einwirken und derart miteinander gekoppelt sind, dass bei Betätigung des ersten Lenkhebels (5.11, 5.21) von der voll ausgefahrenen Stellung bis zur voll eingefahrenen Stellung die Antriebsleistung in Vorwärtsrichtung von 100 % auf 0 % reduziert wird, während bei Betätigung des zweiten Lenkhebels (5.12, 5.22) von einer ausgefahrenen Stellung in die voll eingefahrene Stellung die Antriebsleistung in Rückwärtsrichtung von 0 % auf 100 % erhöht wird.

3. Antriebsaggregat nach Anspruch 1 oder 2, **dadurch gekennzeichnet, dass** die voll ausgefahrenen und/oder die voll eingefahrenen Stellungen der Lenkhebel (5.11, 5.12, 5.21, 5.22) durch Anschläge (4.11, 4.21, 4.1, 4.2) begrenzt sind.

4. Antriebsaggregat nach einem der Ansprüche 1 bis 3, **dadurch gekennzeichnet, dass** die Betätigung der Lenkhebel (5.11, 5.12, 5.21, 5.22) aus den ausgefahrenen in die eingefahrenen Stellungen jeweils gegen die Kraft mindestens einer Rückstellfeder erfolgt.

5. Antriebsaggregat nach einem der Ansprüche 1 bis 4, **dadurch gekennzeichnet, dass** die beiden Steuerventile als Proportional-Ventile ausgebildet sind.

6. Antriebsaggregat nach Anspruch 2 und gegebenenfalls einem der Ansprüche 3 bis 5, **dadurch gekennzeichnet, dass** der Bowdenzug jeweils mit dem zweiten Lenkhebel (5.12, 5.22) verbunden ist und die Koppelung der ersten und zweiten Lenkhebel jeweils bewirkt wird, indem der Schwenkpunkt (S 2) des zweiten Lenkhebels (5.12, 5.22) an einem mit der Handführung fest verbundenen Befestigungselement (4.11, 4.21) angeordnet ist, während der Schwenkpunkt (S 1) des ersten Lenkhebels (5.11, 5.21) am zweiten Lenkhebel (5.12, 5.22) in vorgegebenem Abstand vom Schwenkpunkt (S 2) des zweiten Lenkhebels (5.12, 5.22) angeordnet ist und die Schwenkbewegungen des ersten und des zweiten Lenkhebels in der gleichen Schwenkebene erfolgen, wobei der erste Lenkhebel (5.11, 5.21) jeweils zwischen dem zweiten Lenkhebel (5.12, 5.22) und dem Handgriff (4.1, 4.2) liegt und einen über seinen Schwenkpunkt (S 1) hinausragenden Mitnehmer (5.13) aufweist, welcher derart angeordnet ist, dass bei einer Bewegung des ersten Lenkhebels (5.11, 5.21) aus der voll ausgefahrenen Stellung heraus der zweite Lenkhebel (5.12, 5.22) mitbewegt wird, bis der erste Lenkhebel (5.11, 5.21) in der eingefahrenen Stellung an einem Anschlag (4.1, 4.2) anschlägt und dann der zweite Lenkhebel (5.12, 5.22) bis zu seinem Anlegen an einen Anschlag in der voll eingefahrenen Stellung weiterbewegbar ist.

7. Antriebsaggregat nach Anspruch 6, **dadurch gekennzeichnet, dass** der Anschlag für den ersten Lenkhebel (5.11, 5.21) in der eingefahrenen Stellung der Handgriff (4.1, 4.2) der Handführung (3) ist.

8. Antriebsaggregat nach Anspruch 6 oder 7, **dadurch gekennzeichnet, dass** der Anschlag für den zweiten Lenkhebel (5.12, 5.22) in der voll eingefahrenen Stellung der an seinem Anschlag anliegende erste Lenkhebel (5.11, 5.21) ist.

9. Antriebsaggregat nach den Ansprüchen 7 und 8, **dadurch gekennzeichnet, dass** der erste Lenkhebel (5.11, 5.21) stangenförmig ausgebildet ist und der zweite Lenkhebel (5.12, 5.22) an der dem ersten Lenkhebel zugewandten Seite eine Mulde oder Schale aufweist zur Aufnahme des ersten Lenkhebels (5.11, 5.21), wenn beide Lenkhebel in der voll eingefahrenen Stellung stehen.

10. Antriebsaggregat nach Anspruch 6, **dadurch gekennzeichnet, dass** der Mitnehmer (5.13) am ersten Lenkhebel (5.11, 5.21) als Haken ausgebildet ist, der eine am zweiten Lenkhebel (5.12, 5.22) angeordnete Mitnehmerfläche hintergreift.
